# EUROPÄISCHE PATENTANMELDUNG

(11) **EP 2 338 582 A1**
(43) Veröffentlichungstag der Anmeldung: **29.06.2011**
(21) Anmeldenummer: 10190197.3
(22) Anmeldetag: 05.11.2010
(51) Int. Cl.: B01D 53/04, B67D 7/04

(54) **Aktivkohlefilter**

(30) Priorität: 09.12.2009 DE 102009057564
(71) Anmelder: MAHLE International GmbH, 70376 Stuttgart (DE)
(72) Erfinder: Eschlbeck, Johann, 71522, Backnang (DE); Flach, Matthias, 71686, Remseck (DE); Muffler, Timo, 70186, Stuttgart (DE); Wächter, Tilmann, 70180, Stuttgart (DE)
(74) Vertreter: BRP Renaud & Partner

(57) **Zusammenfassung**

Die Erfindung betrifft ein Aktivkohlefilter (1) mit einem mindestens einer Kammer (3) aufweisenden Filtergehäuse (2) und in den Kammern (3) angeordneter Aktivkohle (4), und mit mindestens einer Heizeinrichtung (5) zum Beheizen der Aktivkohle (4). Erfindungswesentlich ist dabei, dass die Heizeinrichtung (5) derart ausgebildet sind, dass sie die Aktivkohle (4) über den gesamten Strömungsquerschnitt der jeweiligen zugehörigen Kammer (3) im Wesentlichen gleichmäßig beheizt. Hierdurch kann insbesondere sowohl die Desorption begünstigt werden, als auch die Emission des Aktivkohlefilters als auch die Lebensdauer desselben erhöht werden.

## Beschreibung

Die vorliegende Erfindung betrifft ein Aktivkohlefilter mit einem zumindest eine Kammer aufweisenden Filtergehäuse gemäß dem Oberbegriff des Anspruchs 1.

Aus der US 6,701,902 B2 ist ein gattungsgemäßes Aktivkohlefilter bekannt, welches dazu dient, die aus einem Kraftstofftank heraus diffundierenden Kohlenwasserstoffanteile zu binden und diese beispielsweise einem Verbrennungsprozess in einem Verbrennungsmotor zuzuführen. Da die Aufnahmekapazität an Kohlenwasserstoffen bei Aktivkohle üblicherweise begrenzt ist, müssen derartige Aktivkohlefilter regelmäßig nach jeder Beladung mit Kohlenwasserstoffen gespült werden. Im Unterschied zur Adsorption von Kohlenwasserstoffen in der Aktivkohle eines Aktivkohlefilters wird ein Spülprozess, bei welchem die Kohlenwasserstoffanteile von der Aktivkohle wieder desorbiert werden, durch eine erhöhte Temperatur begünstigt, weshalb das bekannte Aktivkohlefilter ein plattenförmiges Heizelement aufweist, das die in dem Aktivkohlefilter vorgesehene Aktivkohle bereichsweise erwärmt, um die Desorption der Kohlenwasserstoffe zu verbessern.

Die vorliegende Erfindung beschäftigt sich mit dem Problem, für ein Aktivkohlefilter der gattungsgemäßen Art, eine verbesserte oder zumindest eine alternative Ausführungsform anzugeben, die sich insbesondere durch ein verbessertes Desorptionsverhalten und eine erhöhte Lebensdauer der Aktivkohle auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Wasseraufnahme und eine Lebenserwartung eines gattungsgemäßen Aktivkohlefilters dadurch zu verbessern, dass eine Heizeinrichtung vorgesehen wird, welche die im Aktivkohlefilter angeordnete Aktivkohle im wesentlichen gleichmäßig beheizt. Bei erhöhten Temperaturen ist sowohl die Desorption der Kohlenwasserstoffe aus der Aktivkohle höher, als auch der Eintrag an Wasser in die Aktivkohle beim Spülen niedriger. Zusätzlich kann durch das Beheizen der Aktivkohle im Aktivkohlefilter die Restmenge an verbleibenden Kohlenwasserstoffen und damit deren Alterung minimiert werden. Das Aktivkohlefilter weist dabei ein Filtergehäuse mit mindestens einer Kammer auf, in welcher die Aktivkohle angeordnet ist. Darüber hinaus weist das Aktivkohlefilter mindestens eine Heizeinrichtung zum Beheizen der Aktivkohle auf, die derart ausgebildet ist, dass sie die Aktivkohle über den gesamten Strömungsquerschnitt der Kammer im Wesentlichen gleichmäßig beheizt. Es kann auch in jeder Kammer eine separate Heizeinrichtung vorgesehen sein. Im Unterschied zu aus dem Stand der Technik bekannten Aktivkohlefiltern, bei welchem lediglich ein kleiner Bereich der Aktivkohle beheizt wird, ist es mit dem erfindungsgemäßen Aktivkohlefilter möglich, den gesamten Strömungsquerschnitt und die im gesamten Strömungsquerschnitt angeordnete Aktivkohle vorzugsweise gleichmäßig zu beheizen, wodurch beim Spülvorgang, eben jene Vorteile erreicht werden.

Bei einer vorteilhaften Weiterbildung der erfindungsgemäßen Lösung, weist die Heizeinrichtung eine Rippenstruktur auf, wobei die einzelnen Rippen parallel zur Strömungsrichtung in der Kammer ausgerichtet sind. Die einzelnen Rippen der Rippenstruktur dienen somit als Strömungsleitelemente beim Rückspülen des Aktivkohlefilters und beheizen die zwischen den einzelnen Rippen der Heizeinrichtung angeordnete Aktivkohle nahezu gleichmäßig. Mit einer derartigen Rippenstruktur ist einerseits eine große und gleichmäßig schnelle Abgabe von Wärmeenergie an die Aktivkohle und damit ein vorzugsweise gleichmäßiges Aufheizen der Aktivkohle möglich. Andererseits behindert eine derartige Rippenstruktur ein Durchströmen der Kammer beim Rückspülen des Aktivkohlefilters nicht oder nur marginal, so dass die Heizeinrichtung strömungstechnisch gesehen nahezu keinen Einfluss auf den Durchflusswiderstand hat.

Bei einer vorteilhaften Weiterbildung der erfindungsgemäßen Lösung, kann die Heizeinrichtung eine andere Struktur insbesondere Staketen, Rohrbündel, Stifte, Nägel oder anders strukturierte Profile aufweisen, in deren Zwischenräume Aktivkohle eingefüllt werden kann.

Bei einer vorteilhaften Weiterbildung der erfindungsgemäßen Lösung, kann die Heizeinrichtung direkt am Frischlufteingang des Aktivkohlefilters angeordnet sein, so dass über die beheizte Aktivkohle die einströmende Frischluft mit erwärmt wird.

Bei einer vorteilhaften Weiterbildung der erfindungsgemäßen Lösung, kann die Heizeinrichtung in einen Bestandteil des Aktivkohlefiltergehäuses integriert sein, insbesondere eingegossen.

Zweckmäßig weist die Heizeinrichtung zumindest ein PTC-Heizelement auf. Derartige PTC-Heizelemente (positive temperature coefficient) sind stromleitende Materialien, die bei tiefen Temperaturen den Strom besser leiten können als bei hohen. Ihr elektrischer Widerstand vergrößert sich somit bei steigender Temperatur wodurch eine derartige Heizeinrichtung in der Lage ist, die abgegebene Heizenergie selbständig zu regulieren. Darüber hinaus sind derartige PTC-Heizelemente kostengünstig herstellbar, so dass insbesondere auf eine aufwändige und damit teure Steuerungseinrichtung prinzipiell verzichtet werden kann.

Bei einer vorteilhaften Weiterbildung der erfindungsgemäßen Lösung ist die Heizeinrichtung und die in ihr vorhandenen PTC-Heizelemente der Heizeinrichtung gegenüber der Aktivkohle abgedichtet, um zu vermeiden, dass die Wärmeleitfähigkeit des Heizelementes durch Aktivkohlestaub reduziert wird. Generell wird beim Befüllen des erfindungsgemäßen Aktivkohlefilters zunächst die eine Heizeinrichtung in eine Kammer eingesetzt und dann die Kammer mit Aktivkohle befüllt. Sind mehrere Kammern mit jeweils einer Heizeinrichtung vorgesehen, werden zunächst die einzelnen Heizeinrichtungen in den Kammern eingesetzt und dann jede Kammer mit Aktivkohle befüllt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Aktivkohlefilter mit einer im Bereich einer Heizeinrichtung geschnittenen Kammer,
- Fig. 2: eine Schrägansicht auf die Heizeinrichtung,
- Fig. 3: eine Ansicht auf die Heizeinrichtung von oben,
- Fig. 4: eine Schnittdarstellung durch das Aktivkohlefilter,
- Fig. 5: einen alternativen Aufbau des Aktivkohlefilters.

Ein Aktivkohlefilter der gattungsgemäßen Art wird dazu verwendet, um aus dem Kraftstofftank entweichende kohlenwasserstoffhaltige Luft zu reinigen, bevor diese in die Umgebung abgelassen wird. Es gibt zwei Fälle in denen Luft aus dem Kraftstofftank entweicht, zum einen beim Nachfüllen des Kraftstoffes zum anderen beim Stillstand oder bei langsamer Bewegung des Kraftfahrzeuges. Im ersten Fall müssen in relativ kurzer Zeit vom Aktivkohlefilter relativ hohe Mengen an Kohlenwasserstoffen aufgenommen, sprich adsorbiert, werden. Im zweiten Fall eventuell über lange Zeiträume eher kleine und kleinste Mengen. Damit ein Aktivkohlefilter ein Lebensdauerbauteil eines Kraftfahrzeuges wird, müssen die Kohlenwasserstoffe von der Aktivkohle desorbiert werden. Zu diesem Zweck spült man während des normalen Fahrbetriebs das Aktivkohlefilter mit Fischluft. Diese Luft durchquert den Aktivkohlefilter, dabei desorbieren die Kohlenwasserstoffe und reinigen somit die Aktivkohle. Danach wird die Luft dem Verbrennungsmotor zugeführt, wo die Kohlenwasserstoffe verbrannt werden. Um diese Speicherkapazität zu erreichen, weist die Aktivkohle viele kleine Körner mit kleinen Poren auf in denen sich die Kohlenwasserstoffe anlagern. Bei nicht erfindungsgemäßen Aktivkohlefiltern kommt es nach und nach zu einer Alterung der Aktivkohle, längerkettige Kohlenwasserstoffe werden von Frischluft bei normalen Umgebungstemperaturen nicht mehr von der Aktivkohle desorbiert. Dadurch werden die Adsorptionsplätze für Butan und kurzkettigere Kohlenwasserstoffe blockiert und der Aktivkohlefilter kann die anfallende Kohlenwasserstoffmenge zum Beispiel beim Betankungsfall nicht mehr speichern, so dass die aus dem Kraftstofftank entweichende Luft nicht mehr effektiv gereinigt wird und somit Kohlenwasserstoffe in die Umgebung gelangen können. Dies kann man zum einen durch sehr große Aktivkohlenvolumina versuchen zu verhindern oder aber durch eine Beheizung der Aktivkohle. Diese Beheizung verhindert zusätzlich unnötigen Wassereintrag in den Aktivkohlefilter. Wird die Aktivkohle beim Spülvorgang beheizt und befindet sich die Heizeinrichtung in Anströmbereich, bzw. in der Aktivkohle direkt am Frischlufteingang des Aktivkohlefilters, so kann die relativ Feuchte der Frischluft reduziert werden. Das mit der Frischluft eingetragene Wasser kann ebenfalls Adsorptionsplätze für Kohlenwasserstoffe besetzen. Dies ist besonders in der letzten Kammer vor dem Luftaustritt zu vermeiden. Denn im Betankungsfall kann es vorkommen, dass gerade diese letzte Kammer die in der Luft enthaltenen Kohlenwasserstoffe herausfiltern muss, da die anderen Kammern bereits mit Kohlenwasserstoffe besättigt sind. Unter einer Kammer versteht man einen Abschnitt mit verändertem Durchflussquerschnitt oder anderer Aktivkohle, es muss nicht unbedingt eine Wand oder ein Sieb oder ein Übergangskanal dazwischen liegen. Die Aktivkohle kann in verschiedenen Kammern verschiedene Arbeitskapazitäten aufweisen, sprich die Porengröße und der Partikeldurchmesser können in jeder Kammer anders sein.

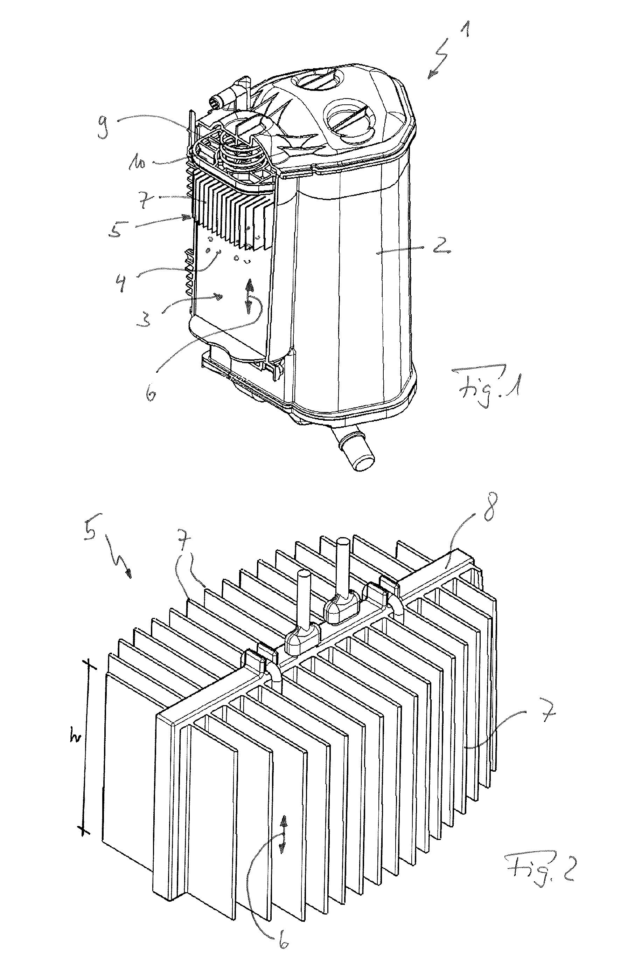

Entsprechend der Fig. 1, weist ein erfindungsgemäßes Aktivkohlefilter 1 ein Filtergehäuse 2 mit mindestens einer Kammer 3 auf, in welcher sowohl Aktivkohle 4 als auch mindestens eine Heizeinrichtung 5 zum Beheizen der Aktivkohle 4 angeordnet sind. Die Kammer 3 ist dabei teilweise geschnitten gemäß der Fig. 1 dargestellt, wobei die Heizeinrichtung 5 erfindungsgemäß derart ausgebildet ist, dass sie Aktivkohle 4 über den gesamten Strömungsquerschnitt der Kammer 3 im Wesentlichen gleichmäßig beheizt. Die Heizeinrichtung 5 ist somit im Wesentlichen gleichmäßig auf den Strömungsquerschnitt aufgeteilt, wobei die Hauptströmungsrichtungen sowohl für den Betankungs-/Tankentlüftungsvorgang, als auch für den umgekehrt verlaufenden Spülvorgang mit dem doppelten Strömungspfeil 6 dargestellt sind.

In den Fig. 1 bis 3 ist eine Ausführungsform der Heizeinrichtung 5 gezeigt, sie weist eine Rippenstruktur auf, wobei die einzelnen Rippen 7 parallel zur Strömungsrichtung 6 in der Kammer 3 ausgerichtet sind. Die Rippen 7 der Heizeinrichtung 5 bilden demgemäß eine Art Strömungsleitelemente, zwischen welchen Aktivkohlepartikel angeordnet sind, die direkt von den Rippen erwärmt werden. Die Heizeinrichtung 5 kann dabei mindestens ein PTC-Heizelement 8 aufweisen, welches in der Lage ist, die abzugebende Heizenergie entsprechend der Temperatur auf Grund von temperaturabhängigen Widerstandsänderungen selbstständig zu regeln. Bei dem in der Fig. 1 gezeigten Filtergehäuse 2 befindet sich die Heizeinrichtung 5 direkt unterhalb einer Platte 10, über die eine Federeinrichtung 9 die Aktivkohle fest in der Kammer 3 zusammendrückt. Auf diese Weise wird die einströmende Luft, die über die Lufteinströmöffnung und ein Spülventil in das Gehäuse 2 eintritt, bereits beim Einströmen in das Aktivkohlefilter 1 erwärmt, indem Sie über die erwärmte Aktivkohle streicht. Durch diese Erwärmung lässt sich auch der Wärmeverlust, der bei der Desorption auftritt, kompensieren. Durch den Aufbau dieses Aufführungsbeispiels ist der Befüllvorgang folgendermaßen: Der untere Teil der Kammer 3 wird mit Aktivkohle befüllt, dann wird die Heizeinrichtung 5 eingesetzt, der Rest befüllt, die Platte 10 mit Federeinrichtung 9 aufgesetzt und das Filtergehäuse 2 geschlossen.

Insgesamt kann das Aktivkohlefilter 1 selbstverständlich drei oder mehr Kammern 3 aufweisen, wobei die Heizeinrichtung 5 in der der Umgebung zugewandten Kammer 3 angeordnet ist. Alternativ kann in jeder Kammer 3 eine separate Heizeinrichtung 5 vorgesehen werden. Diese Heizeinrichtung(en) 5 werden über einen zentralen Stromgeber mit einer Schaltung angesteuert. Da die PTC-Heizelemente 8 selbstständig regelnd arbeiten reicht eine einfache An-/Ausschaltung aller Heizeinrichtungen 5, um bei normalem Fahrbetrieb und damit während des Spülvorgangs eingeschaltet zu sein. Die aus einem nicht gezeigten Kraftstofftank entweichenden Kohlenwasserstoffe müssen somit zunächst die einzelne Kammern 3 ohne Heizeinrichtung 5 durchlaufen, bevor sie in die Kammer 3 mit der Heizeinrichtung 5 gelangen. Selbstverständlich sind dabei auch die Kammern 3 ohne Heizeinrichtung mit Aktivkohle 4 befüllt und daher zur Adsorption von Kohlenwasserstoffen in der Lage. Die in den einzelnen Kammern 3 vorgesehene Aktivkohle 4 weist dabei üblicherweise eine Partikelgröße von d > 1 mm auf, wobei ein Abstand der einzelnen Rippen 7 der Heizeinrichtung 5 deutlich größer ist als die größte vorkommende Partikelgröße, so dass ein Befüllen der Kammer 3 mit Aktivkohle 4 auch nach dem Einbau der Heizeinrichtungen 5 noch problemlos möglich ist.

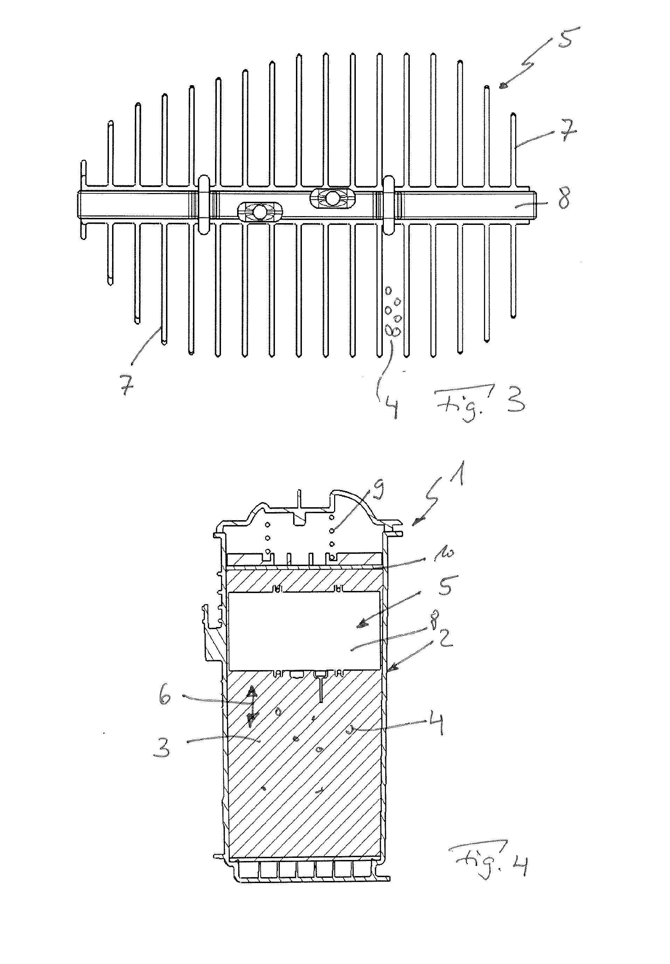

Zusätzlich kann eine nicht gezeigte Steuerungseinrichtung vorgesehen sein, welche die Heizeinrichtung 5 und insbesondere in der Heizeinrichtung 5 das PTC-Heizelement 8 aktiviert, sofern dies gewünscht ist. Gewünscht ist dies üblicherweise bei einem Spülvorgang, das heißt bei der Desorption, bei welcher die in- bzw. an der Aktivkohle 4 angelagerten Kohlenwasserstoffe wieder gelöst werden und nach dem Spülen einer Verbrennung im Verbrennungsmotor zugeführt werden. Ebenfalls vorgesehen sein kann oben bereits erwähnte Federeinrichtung 9, die die Aktivkohle 4 in der Kammer 3 zusammendrückt und dadurch den Volumenausgleich bei Setzungsprozessen der Kohle durch Vibration im Fahrzeug kompensieren bzw. ein unerwünschtes Rütteln der einzelnen Aktivkohlepartikel verhindern kann. Die Federeinrichtung 9 bzw. eine damit verbundene, strömungsdurchlässige Platte 10 kann unmittelbar an der Heizeinrichtung 5 anliegen, es kann sich aber auch eine zwischen der Heizeinrichtung 5 und der Platte 10 eine Aktivkohleschicht befinden. Die Heizeinrichtung 5 kann sich dabei, wie gemäß den Fig. 1 und 3 dargestellt ist, über lediglich einen Teil der Länge der Kammern 3 erstrecken, oder aber diese jeweils über die gesamte Länge ausfüllen. Die Heizeinrichtung 5 ist dabei generell in der Lage eine Temperatur von bis zu 140° zu erzeugen und dadurch die Kohle und die Spülluft mit über 80° zu beaufschlagen, wobei selbstverständlich auch andere Temperaturen, mittels der Wahl des PTC-Heizelementes 8 einstellbar sind. Die gewählte Temperatur ist dabei vorzugsweise so gewählt, dass eine Desorption verbessert, eine Alterung und ein Wassereintrag reduziert werden.

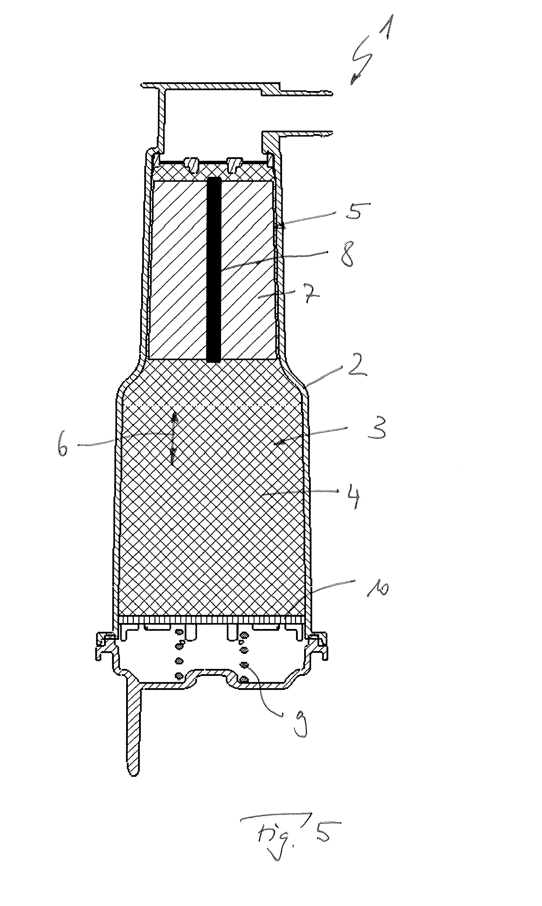

In der Fig. 5 ist ein alternativer Aufbau eines Aktivkohlefilters 1 dargestellt. Insbesondere die letzte Kammer 3 vor dem Luftaustritt, bzw. die dem Lufteintritt nächste Kammer ist andersherum aufgebaut. In diesem Beispiel ist die Öffnung zur Umgebung nicht auf der Seite, auf der das Filtergehäuse 2 mittels eines Deckels verschlossen wird, sondern auf den entgegensetzten Seite, so dass die Heizeinrichtung 5 eingesetzt wird bevor die Aktivkohle 4 eingefüllt wird. Die Heizeinrichtung 5 kann auch in den Kunststoff des Filtergehäuses 2 integriert sein. Üblicherweise liegt zwischen der Platte 10 und der Aktivkohle 4 ein Vlies, um zu verhindern, dass die Aktivkohle 4 in einen Umströmbereich hineinbröselt. Dieses Vlies kann an der Heizeinrichtung 5 angebracht sein oder aber durch die Heizeinrichtung 5 an der Platte 10 festgeklemmt. Auch kann die Heizeinrichtung 5 fest mit der Platte 10 verklemmt sein und wird dann mit dieser zusammen in das Filtergehäuse 2 eingebaut.

Alternativ kann in einer nicht gezeigten Ausführungsform die Heizeinrichtung 5 aus mehreren Unterelementen bestehen. Zum Beispiel zwei gleichen Elementen, die nebeneinander angeordnet sind und senkrecht oder unter einem Winkel zueinander verlaufenden Rippen aufweisen können. Weitere Alternativen sind mehrere parallel stehenden Röhren, die das PTC-Heizelement 8 enthalten und auf ihrer Außenkontur Stacheln, Rippen, gewellte Rippen oder Ähnliches aufweisen, um dadurch einen Wärmeeintrag in die Aktivkohle 4 zu verbessern. Je nach Anforderung kann auch der in Fig. 3 gezeigte Abstand zwischen den Rippen 7 von innen nach außen variieren. Die äußere Einhüllende Form der Rippen 7 wird an die jeweilige Form des Aktivkohlefilters 1 angepasst. Das gilt auch für Ihre Höhe h. Diese Höhe h kann über die Breite der Heizeinrichtung 5 variieren, um alle Prozesse zu optimieren.

Die PTC-Heizelemente 8, die in der Heizeinrichtung 5 integriert, sind können rund oder eckig sein, jedoch ist es wichtig, dass sich kein Aktivkohlenstaub zwischen die PTC-Heizelemente 8 und die Rippen 7 legen darf, was den Wärmeübergang behindern würde. Die Rippen 7 werden vorzugsweise aus Metall hergestellt, besonders bevorzugt ist es die Rippen 7 oder anderen Wärmeleitelemente aus Aluminium zu fertigen. Die Stromführung nach außen kann seitlich durch das Filtergehäuse 2 geführt werden oder oben und unten, je nachdem was im Anwendungsfall sinnvoller, praktischer ist.

Mit dem erfindungsgemäßen Aktivkohlefilter 1 ist es somit möglich, den gesamten von einer Spülluft beim Spülprozess des Aktivkohlefilters 1 durchströmten Querschnitt aufzuheizen und dadurch die Desorption, die Antialterung und den Antiwassereintrag zu begünstigen, wobei selbstverständlich nicht nur direkt die Aktivkohle 4 beheizt, sondern gleichzeitig auch die durchströmende und von außen angesaugte Frischluft erwärmt werden kann. Durch diese Verbesserungen des Aktivkohlefilters 1 kann auch das Emissionsverhalten deutlich verbessert werden.

## Patentansprüche

1. Aktivkohlefilter (1) mit einem mindestens eine Kammer (3) aufweisenden Filtergehäuse (2) und in der Kammer (3) angeordneter Aktivkohle (4), und mit mindestens einer Heizeinrichtung (5) zum Beheizen der Aktivkohle (4),
**dadurch gekennzeichnet, dass**
die Heizeinrichtung (5) derart ausgebildet ist, dass sie die Aktivkohle (4) über den gesamten Strömungsquerschnitt der Kammer (3) im Wesentlichen gleichmäßig beheizt.

2. Aktivkohlefilter nach Anspruch 1,
**dadurch gekennzeichnet,**
**dass** die Heizeinrichtung (5) eine Rippenstruktur, Rippen (7), Stacheten, Rohrbündel oder strukturierte Profile aufweist, wobei die einzelnen Rippen (7), Stacheten, oder Profile parallel zur Strömungsrichtung (6) in der Kammer (3) ausgerichtet sind.

3. Aktivkohlefilter nach Anspruch 1 oder 2,
**dadurch gekennzeichnet,**
**dass** die Heizeinrichtung (5) je mindestens ein PTC-Heizelement (8) aufweisen.

4. Aktivkohlefilter nach einem der Ansprüche 1 bis 3,
**dadurch gekennzeichnet,**
**dass** das Aktivkohlefilter (1) mindestens eine Kammer (3) aufweist, wobei eine Heizeinrichtung (5) in der der Umgebung zugewandten Kammer (3) an der der Frischluft zugewandten Seite des Aktivkohlefilters (1) angeordnet ist.

5. Aktivkohlefilter nach einem der Ansprüche 1 bis 4,
**dadurch gekennzeichnet,**
**dass** eine Steuerungseinrichtung vorhanden ist, welche die Heizeinrichtung (5) insbesondere bei einem Spülvorgang aktiviert.
